(19) **Europäisches Patentamt / European Patent Office / Office européen des brevets**

(11) **EP 4 170 803 A1**

(12) # EUROPEAN PATENT APPLICATION
published in accordance with Art. 153(4) EPC

(43) Date of publication:
**26.04.2023 Bulletin 2023/17**

(21) Application number: **20948972.3**

(22) Date of filing: **11.08.2020**

(51) International Patent Classification (IPC):
*H01M 50/367* (2021.01)     *H01M 50/358* (2021.01)
*H01M 50/30* (2021.01)       *H01M 50/10* (2021.01)

(52) Cooperative Patent Classification (CPC):
Y02E 60/10

(86) International application number:
**PCT/CN2020/108396**

(87) International publication number:
**WO 2022/032473 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• **MA, Cong**
  **Ningde, Fujian 352100 (CN)**
• **DENG, Daolin**
  **Ningde, Fujian 352100 (CN)**
• **ZHOU, Mengcheng**
  **Ningde, Fujian 352100 (CN)**
• **CHEN, Wen**
  **Ningde, Fujian 352100 (CN)**

(74) Representative: **Klunker IP Patentanwälte PartG mbB Destouchesstraße 68 80796 München (DE)**

(54) **ELECTROCHEMICAL DEVICE AND ELECTRONIC DEVICE**

(57)    This application relates to an electrochemical apparatus and an electronic device. The electrochemical apparatus includes a housing having a cavity and including a wall, where the wall is provided with a stress-weak zone. In this application, the stress-weak zone arranged on the wall of the housing of the electrochemical apparatus is a weak part of the housing. When the electrochemical apparatus generates gas under conditions such as short circuit, high temperature, and overcharge, a pressure inside the housing increases. Under the action of the pressure, the stress-weak zone can form an opening, and the opening allows the inner cavity of the housing to communicate with the external environment in which the electrochemical apparatus is located, to discharge the gas in the inner cavity of the housing, thereby reducing risks of expansion, deformation, or even explosion of the electrochemical apparatus caused by gas generation inside the electrochemical apparatus, and improving safety of the electrochemical apparatus.

FIG. 1

EP 4 170 803 A1

**Description**

**TECHNICAL FIELD**

This application relates to the technical field of energy storage devices, and in particular, to an electrochemical apparatus and an electronic device.

**BACKGROUND**

Lithium-ion batteries are a type of rechargeable secondary battery, during working of which lithium ions migrate between positive and negative electrodes, and are intercalated into or deintercalated from the electrodes to generate electrical energy. Specifically, during charging, lithium ions are deintercalated from the positive electrode and intercalated into the negative electrode through the electrolyte. During discharging, lithium ions are deintercalated from the negative electrode and intercalated into the positive electrode through the electrolyte. Lithium-ion batteries are prone to generate gas under conditions such as short circuit, high temperature, and overcharge, causing the battery to swell. When the generated gas cannot be discharged, the battery will malfunction, deform, or even explode, endangering personal safety of users.

**SUMMARY**

This application provides an electrochemical apparatus and an electronic device, to improve safety of the electrochemical apparatus.
A first aspect of this application provides an electrochemical apparatus, where the electrochemical apparatus includes:

a housing having a cavity and including a wall;
where the wall is provided with a stress-weak zone.

In a possible design, the stress-weak zone is a continuous structure or a discontinuous structure.
In a possible design, a total length of the stress-weak zone arranged on the wall is greater than or equal to 3 mm.
In a possible design, H is a depth of the stress-weak zone, and H is 30% to 90% of a thickness of the wall.
In a possible design, W is a width of the stress-weak zone, and W is 50% to 110% of a thickness of the wall.
In a possible design, the wall is provided with one or more stress-weak zones.
In a possible design, the wall is a wall with the largest area of the housing.
In a possible design, the stress-weak zone is arranged on at least one of an interior surface and an exterior surface of the wall.
In a possible design, an elastic modulus of the wall is greater than or equal to 1000 MPa.
In a possible design, the stress-weak zone includes at least one of an indentation, a groove, or a zone with a material strength lower than that of its surrounding zones.
In a possible design, the wall has an outer end edge, and a curvature of the stress-weak zone is the same as a curvature of the outer end edge closest to the stress-weak zone.
In a possible design, the wall has an outer end edge and a first zone, where the first zone has a first outer edge, the first outer edge coincides with the outer end edge, and the stress-weak zone is arranged in the first zone; and a ratio of an area of the first zone to an area of the wall ranges from 30% to 50%.
In a possible design, the outer end edge deviates inwardly by a first distance L1 to form the first zone, the first zone is an annular structure, the first zone has a first inner edge and a first outer edge, and the first outer edge coincides with the outer end edge.
In a possible design, the first zone is an annular structure, the first zone has a first inner edge, and the first inner edge is a circle formed by connecting line segments, where the line segments are formed by extension of points on the first outer edge toward the inside of the wall by a same first distance L1 in a direction of normal line or perpendicular line of the first outer edge.
In a possible design, the first zone is an annular structure, the first zone has a first inner edge, and the first inner edge is a circle formed by connecting line segments, where the line segments are formed by extension of points on the first outer edge toward the inside of the wall by a same first distance L1 in a direction of normal line or perpendicular line of the first outer edge, where the line segments have a non-connected part, and two of the line segments that are adjacent to the non-connected part further extend to intersect with each other based on a same curvature as the first outer edge that forms the two line segments.
In a possible design, there is a second distance L2 between the outer end edge and a geometric center of the wall, where the first distance L1 and the second distance L2 satisfy 0.1≤L1/L2≤0.4.

In a possible design, the outer end edge and the first inner edge are both circular-shaped or arc-shaped; and a distance between the first inner edge and the geometric center is R1, a radius of the outer end edge is R, and 0.7≤R1/R≤0.8.

In a possible design, the wall is circular, and the first zone is annular; and the first zone has an inner radius of R1 and an outer radius of R;

where $R1 = \sqrt{0.55}R$ .

In a possible design, the wall is rectangular, and the first zone is a rectangular ring; and under the condition that side lengths of the wall are t1 and t2 respectively, the first distance L1, t1, and t2 satisfy the relation (t1-2L1)×(t2-2L1)=0.55t1×t2.

In a possible design, the wall is in an asymmetric shape, and the first zone is an asymmetric ring.

In a possible design, the wall is L-shaped, and the first zone is an L-shaped ring; under the condition that side lengths of the wall are t1, t2, t3, t4, t5, and t6 respectively and that t2=t4+t6 and t3=t1+t5, the first distance L1, t1, t2, t3, t4, t5, and t6 satisfy the relation: 0.45×(t2×t3-t5×t6)=(t2×t3-(t2-2L1)×(t3-2L1)).

In a possible design, the first zone is an asymmetric L-shaped ring.

In a possible design, the wall has an outer end edge and a second zone, the stress-weak zone is arranged in the second zone, the second zone has a second outer edge, and the second outer edge is a circle formed by connecting line segments, where the line segments are formed by extension of points on the first outer edge toward the inside of the wall by a same third distance L3 in a direction of normal line or perpendicular line of the first outer edge.

In a possible design, the wall has an outer end edge and a second zone, and the stress-weak zone is arranged in the second zone; the second zone has a second outer edge, and the second outer edge is a circle formed by connecting line segments, where the line segments are formed by extension of points on the first outer edge toward the inside of the wall by a same third distance L3 in a direction of normal line or perpendicular line of the first outer edge, where the line segments have a non-connected part, and two of the line segments that are adjacent to the non-connected part further extend to intersect with each other based on a same curvature as the first outer edge that forms the two line segments; and a ratio of an area of the second zone to an area of the wall ranges from 10% to 22%.

In a possible design, the wall has an outer end edge, the outer end edge deviates inwardly by a third distance L3 to form a second outer edge, and the second outer edge encloses the second zone; and a ratio of an area of the second zone to an area of the wall ranges from 10% to 22%.

In a possible design, there is a second distance L2 between the outer end edge and a geometric center of the wall, where the third distance L3 and the second distance L2 satisfy 0.2≤L3/L2≤0.5.

In a possible design, the outer end edge and the second outer edge are both circular-shaped or arc-shaped; and a distance between the second outer edge and the geometric center is R2, a radius of the outer end edge is R, and 0.3≤R2/R≤0.5.

In a possible design, the wall and the second zone are both circular;

where $R2 = \sqrt{0.2}R$ .

In a possible design, the wall and the second zone are both rectangular; and under the condition that side lengths of the wall are t1 and t2 respectively, the third distance L3, t1, and t2 satisfy the relation (t1-2L3)×(t2-2L3)=0.2t1×t2.

In a possible design, the wall and the second zone are both L-shaped; and under the condition that side lengths of the wall are t1, t2, t3, t4, t5, and t6 respectively and that t2=t4+t6 and t3=t1+t5, the third distance L3, t1, t2, t3, t4, t5, and t6 satisfy the relation: (t3-2L3)×(t4-2L3)+t6×(t1-2L3)=0.2×(t2×t3-t5×t6).

Another aspect of this application provides an electronic device, where the electronic device includes:

> a housing;
> a screen, installed on the housing; and
> an electrochemical apparatus, located in an inner cavity of the housing;
> where the electrochemical apparatus is the foregoing electrochemical apparatus.

In this application, the stress-weak zone arranged on the wall of the housing of the electrochemical apparatus is a weak part of the housing. When the electrochemical apparatus generates gas under conditions such as short circuit, high temperature, and overcharge, a pressure inside the housing increases. Under the action of the pressure, the stress-weak zone can form an opening, and the opening allows the inner cavity of the housing to communicate with the external environment in which the electrochemical apparatus is located, so as to discharge the gas in the inner cavity of the housing. This reduces risks of expansion, deformation, or even explosion of the electrochemical apparatus caused by gas generation inside the electrochemical apparatus, and improves safety of the electrochemical apparatus.

It should be understood that the foregoing general description and the following detailed description are only exemplary and are not intended to limit this application.

**BRIEF DESCRIPTION OF DRAWINGS**

FIG. 1 is a schematic structural diagram of a wall and a stress-weak zone provided in a first embodiment of this application;

FIG. 2 is a schematic structural diagram of a wall and a stress-weak zone provided in a second embodiment of this application;

FIG. 3 is a schematic diagram of a first zone and a second zone of the stress-weak zone provided in a first embodiment of this application;

FIG. 4 is a schematic diagram of a first zone and a second zone of the stress-weak zone provided in a second embodiment of this application;

FIG. 5 is a schematic diagram of a first zone and a second zone of the stress-weak zone provided in a third embodiment of this application;

FIG. 6 is a schematic diagram of a size of the stress-weak zone in an embodiment of FIG. 1;

FIG. 7 is a schematic diagram of a shape of a stress-weak zone in a first scheme;

FIG. 8 is a schematic diagram of a shape of a stress-weak zone in a second scheme; and

FIG. 9 is a schematic diagram of a shape of a stress-weak zone in a third scheme.

Reference signs:

1: wall;

11: outer end edge;
12: first zone;

121: first inner edge;
122. first outer edge;

13: second zone;
131. second outer edge; and

2: stress-weak zone.

The accompanying drawings herein are incorporated into this specification and form a part of this specification, illustrate the embodiments conforming to this application, and are intended to explain the principles of this application together with this specification.

**DESCRIPTION OF EMBODIMENTS**

To help better understand the technical solutions of this application, the following describes the embodiments of this application with reference to the accompanying drawings.

Apparently, the described embodiments are merely some but not all of the embodiments of this application. All other embodiments obtained by persons of ordinary skill in the art based on the embodiments of this application shall fall within the protection scope of this application.

The terms used in the embodiments of this application are merely intended to describe specific embodiments, but not intended to limit this application. The terms "a/an", "the" and "this" of singular forms used in the embodiments and the appended claims of this application are also intended to include plural forms, unless otherwise specified in the context clearly.

It should be understood that in this specification, a term "and/or" is only an associative relationship for describing associated objects, indicating that three relationships may exist. For example, A and/or B may indicate three situations: A exists independently; A and B exist simultaneously; and B exists independently. In addition, a character "/" in this specification generally indicates an "or" relationship between contextually associated objects.

It should be noted that the directional terms such as "above", "under", "left", and "right" described in the embodiments of this application are described as seen from the angles shown in the accompanying drawings, and should not be understood as limitations to the embodiments of this application. In addition, in the context, it should be further understood that when an element is referred to as being "above" or "under" another element, the element can not only be directly connected "above" or "under" the another element, but also be indirectly connected "above" or "under" the another element through an intermediate element.

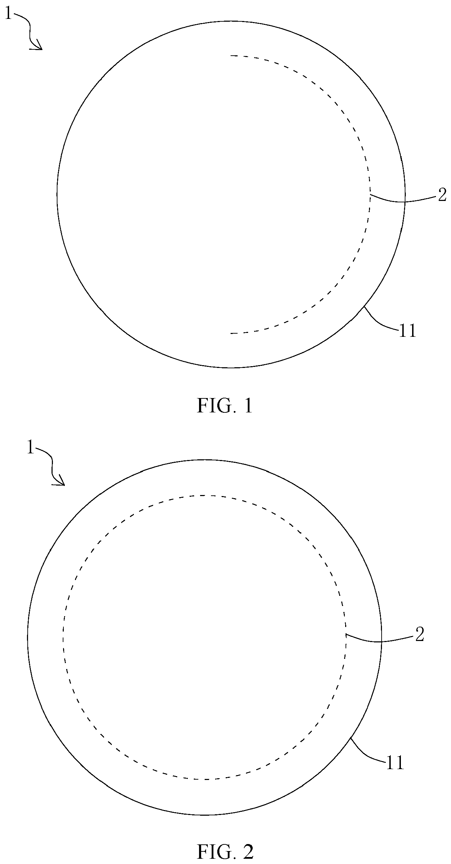

An embodiment of this application provides an electrochemical apparatus. The electrochemical apparatus includes a housing and an electrode assembly located inside the housing, where the electrode assembly includes a terminal, the terminal is configured to transport electrical energy generated by the electrode assembly, at least part of the electrode assembly is located in a cavity of the housing, and the housing is configured to protect the electrode assembly. The housing may be in various shapes such as circular, square, rectangular, L-shaped, and irregular shapes. The wall of the housing encloses one of the above-mentioned shapes. A plurality of walls of the housing includes a wall 1. The wall 1 may be in various shapes such as circular, square, rectangular, L-shaped, and irregular shapes. As shown in FIG. 1 and FIG. 2, the wall 1 is provided with a stress-weak zone 2.

In this embodiment, the stress-weak zone 2 arranged on the wall 1 of the housing of the electrochemical apparatus is a weak part of the housing. When the electrochemical apparatus generates gas under conditions such as short circuit, high temperature, and overcharge, a pressure inside the housing increases. Under the action of the pressure, the stress-weak zone 2 can form an opening, and the opening allows the inner cavity of the housing to communicate with the external environment in which the electrochemical apparatus is located, so as to discharge the gas in the inner cavity of the housing. This reduces risks of expansion, deformation, or even explosion of the electrochemical apparatus caused by gas generation inside the electrochemical apparatus, and improves safety of the electrochemical apparatus.

Specifically, the stress-weak zone 2 in this embodiment of this application may include at least one of an indentation, a groove, or a zone with a material strength lower than that of its surrounding zones. The zone with a material strength lower than that of its surrounding zones means that: a material strength of the stress-weak zone 2 is lower than that of other zones of the wall 1. When the wall 1 is under stress, the material in the stress-weak zone 2 is easily deformed, thus forming an opening. In addition, both the groove and the indentation are zones with lower strength in the wall 1, namely, the zones that are easily broken to form an opening when under stress. The following description uses an example in which the stress-weak zone 2 is a groove or an indentation.

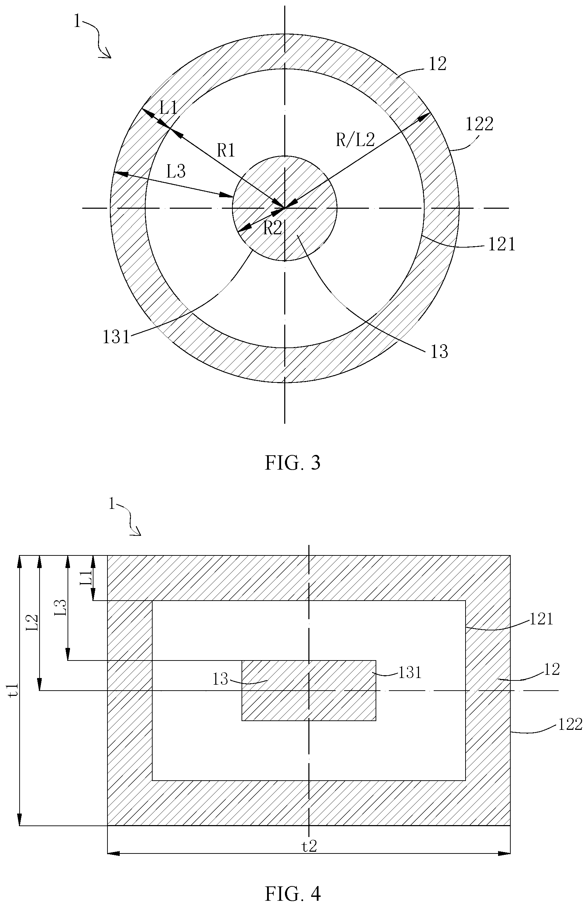

Specifically, as shown in FIG 3 to FIG. 5, the wall 1 has an outer end edge 11 and a first zone 12, where the outer end edge 11 is a position at which an outer contour of the wall 1 is located, the first zone 12 has a first outer edge 122, the first outer edge 122 coincides with the outer end edge 11, and the stress-weak zone 2 is arranged in the first zone 12, in other words, the first zone 12 is a zone that can be used to arrange the stress-weak zone 2.

In this embodiment, when a pressure in the housing increases due to gas generation of the electrochemical apparatus, the wall 1 is subjected to the pressure, and a position of the wall 1 that is close to the outer end edge 11 (the first zone 12) is subjected to a greater pressure, in other words, the position is more likely to break under the action of pressure than other positions. Therefore, compared with that the stress-weak zone 2 is arranged in other positions of the wall 1, when the stress-weak zone 2 is arranged in the first zone 12, the stress-weak zone 2 is subjected to a greater pressure under the action of the gas generated in the housing. In other words, the stress-weak zone 2 at this position is easier to form an opening to discharge the gas in the housing, thereby further reducing risks of expansion, deformation, and even explosion of the electrochemical apparatus.

In addition, a ratio of an area of the first zone 12 to an area of the wall 1 ranges from 30% to 50%. For example, the ratio of the two areas may be 30%, 35%, 38%, 45%, or 50%. In an embodiment, the ratio of the area of the first zone 12 to the area of the wall 1 is 45%. In this case, the stress-weak zone 2 provided in the first zone 12 can well meet the pressure relief requirements.

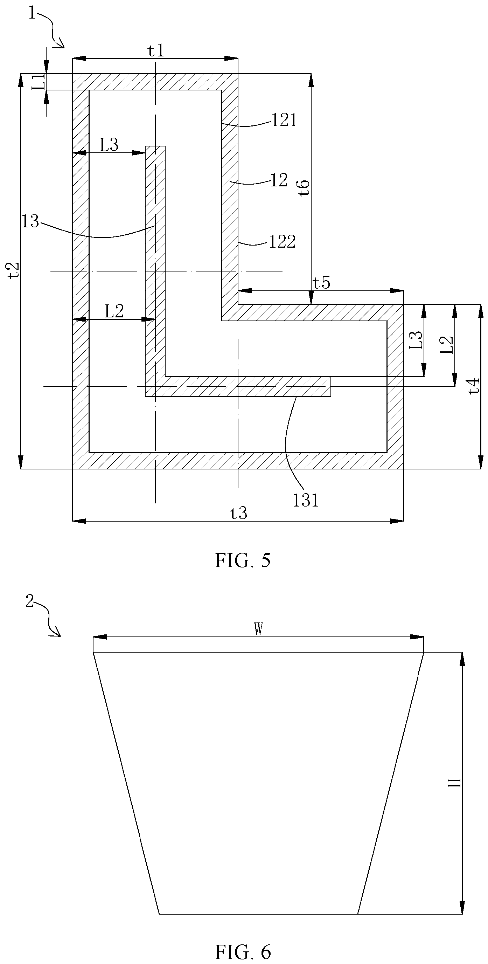

More specifically, as shown in FIG. 3 and FIG. 4, the first zone 12 is an annular structure, the first zone 12 has a first inner edge 121, and the first inner edge 121 is a circle formed by connecting line segments, where the line segments are formed by extension of points on the first outer edge 122 toward the inside of the wall 1 by a same first distance L1 in a direction of normal line or perpendicular line of the first outer edge 122. Alternatively, as shown in FIG. 5, the first inner edge 121 may be formed in the following manner: After extension of points on the first outer edge 122 toward the inside of the wall 1 by a first distance L1 in a direction of normal line or perpendicular line of the first outer edge 122 to form a plurality of line segments, at least two of the line segments are not connected, meaning that there is a non-connected part (meaning that the closed first outer edge 122 extends inwardly by a first distance L1 to form an unclosed structure). Two of the line segments that are adjacent to the non-connected part further extend to intersect with each other, so that the first outer edge 122 extends inwardly by the first distance L1 to form a closed circle. In this case, a curvature of the extension of the two line segments is equal to a curvature of the first outer edge 122, and the closed circle is the first inner edge 121 described above.

Therefore, as shown in FIG. 5, the curvature and shape of the first inner edge 121 formed after the extension are the same as those of the first outer edge 122.

In some embodiments, the wall 1 may be in an asymmetric shape, and the first zone 12 is an asymmetric ring.

In this embodiment, as shown in FIG. 3 to FIG. 5, when the first outer edge 122 of the first zone 12 coincides with the outer end edge 11 of the wall 1, the first zone 12 may be a ring structure formed after the outer end edge 11 of the wall 1 deviates inwardly by the first distance L1. Therefore, when the outer end edge 11 of the wall 1 is a closed structure, the first zone 12 is a closed ring structure, and all parts of the first inner edge 121 have a same distance from the outer end edge 11 of the wall 1. The distance is a width of the first zone 12 (a vertical distance between the first inner edge 121 and the first outer edge 122). The stress-weak zone 2 may be arranged in the annular first zone 12 and located between the first inner edge 121 and the first outer edge 122. Certainly, the stress-weak zone 2 may alternatively be arranged in the first inner edge 121 and the first outer edge 122.

Further, as shown in FIG. 3 to FIG. 5, there is a second distance L2 between the outer end edge 11 and a geometric center of the wall surface 1, and the first distance L1 (a vertical distance between the first outer edge 122 and the first inner edge 121) and the second distance L2 satisfy: $0.1 \leq L1/L2 \leq 0.4$, for example, a ratio of the two may be 0.1, 0.2, 0.25, 0.3, 0.4, or the like.

In this embodiment, when the ratio of the first distance L1 to the second distance L2 satisfies the above relation, the ratio of the area of the first zone 12 to the area of the wall 1 ranges from 30% to 50%. In this case, the stress-weak zone 2 is arranged in the first zone 12, and when gas is generated inside the electrochemical apparatus, the stress-weak zone 2 can quickly form an opening to discharge the gas inside the electrochemical apparatus, thereby improving the safety of the electrochemical apparatus.

In an embodiment, as shown in FIG. 3, the outer end edge 11 and the first inner edge 121 of the wall 1 may both be circular-shaped or arc-shaped, and a central angle of the outer end edge 11 may be 360° or less than 360°, meaning that at least part of the wall 1 may be arc-shaped. In this case, the distance between the first inner edge 121 and the geometric center of the wall surface 1 is R1, a radius of the outer end edge 11 is R, and R1 and R satisfy: $0.7 \leq R1/R \leq 0.8$, for example, a ratio of R1 to R may be: 0.71, 0.75, 0.8, or the like.

In this embodiment, as shown in FIG. 3, R1 represents the distance between the first inner edge 121 of the first zone 12 and the center of the wall 1. In this case, a width of the first zone 12 is R-R1. When $0.7 \leq R1/R \leq 0.8$, $0.2R \leq R-R1 \leq 0.3R$, meaning that a ratio of the width of the first zone 12 to the radius R of the outer end edge 11 satisfies: $0.2 \leq (R-R1)/R \leq 0.3$. In this case, the first zone 12 with this width can satisfy that the ratio of the area of the first zone 12 to the area of the wall 1 ranges from 30% to 50%.

Specifically, as shown in FIG. 3, the wall 1 is circular, that is, the outer end edge 11 of the wall 1 encloses a circular wireframe. In this case, the first zone 12 is a circular ring, an inner radius of the first zone 12 is R1, and an outer radius is R, where R1 =

In this embodiment, the area of the first zone 12 is $S1 = \pi R^2 - \pi R1^2 = 0.45\pi R^2$. In this case, the ratio of the area S1 of the first zone 12 to the area S of the wall 1 satisfies $S1/S = 0.45$.

In this embodiment, when the wall 1 is a regular circle, the first zone 12 configured to arrange the stress-weak zone 2 is a regular annular structure, making it easy to determine the position of the stress-weak zone 2.

For example, when R=3 mm, R1 may be 2.22 mm. In this case, the inner radius of the first zone 12 is R1=2.22 mm, the outer radius is R=3 mm, and $S1/S = 0.4524$.

In another embodiment, as shown in FIG. 4, the wall 1 is rectangular, that is, the outer end edge 11 of the wall 1 encloses a rectangular wireframe. In this case, the first zone 12 is a rectangular ring, side lengths of the wall 1 are t1 and t2 (the length and width of the rectangular wireframe) respectively, and the first distance L1, t1 and t2 satisfy the relation $(t1-2L1) \times (t2-2L1) = 0.55 t1 \times t2$.

In this embodiment, the area S of the wall 1 satisfies $S = t1 \times t2$, and the area S1 of the first zone 12 satisfies: $S1 = S - (t1-2L1) \times (t2-2L1) = 0.45 t1 \times t2$. Therefore, the ratio of the area of the first zone 12 to the area of the wall 1 satisfies $S1/S = 0.45$.

For example, when t1=60 mm and t2=40 mm, L1 may be 6 mm. In this case, the area of the first zone 12 is $S1=1056$ mm$^2$, the area of the wall 1 is $S=2400$ mm$^2$, and $S1/S = 0.44$.

In this embodiment, when the wall 1 is a regular rectangle, the first zone 12 configured to arrange the stress-weak zone 2 is a regular rectangular structure, making it easy to determine the position of the stress-weak zone 2.

In another embodiment, as shown in FIG. 5, the wall 1 is L-shaped, that is, the outer end edge 11 of the wall 1 encloses an L-shaped wireframe. In this case, the first zone 12 is an L-shaped ring, and under the condition that side lengths of the wall 1 are t1, t2, t3, t4, t5, and t6 respectively and that t2=t4+t6 and t3=t1+t5, the first distance L1, t1, t2, t3, t4, t5, and t6 satisfy the relation: $0.45 \times (t2 \times t3 - t5 \times t6) = (t2 \times t3 - (t2-2L1) \times (t3-2L1))$.

In this embodiment, the area S of the wall 1 satisfies $5 = t2 \times t3 - t5 \times t6$, and the area S1 of the first zone 12 satisfies: $S1 = t2 \times t3 - (t2-2L1)(t3-2L1)$. Therefore, the ratio of the area of the first zone 12 to the area of the wall 1 satisfies $S1/S = 0.45$.

For example, when t1=25 mm, t2=60 mm, t3=50 mm, t4=20 mm, t5=25 mm, and t6=40 mm, the first distance L1 may be 4.32 mm. In this case, the area of the first zone 12 is $S1=875.75$ mm$^2$, the area of the wall 1 is $S=2000$ mm$^2$, and $S1/S = 0.438$.

In addition, as shown in FIG. 3 to FIG. 5, the wall 1 may also have a second zone 13 configured to arrange the stress-weak zone 2, the second zone 13 has a second outer edge 131, and the second outer edge 131 is a closed wireframe formed by an outer contour of the second zone 13.

Specifically, as shown in FIG. 3 and FIG. 4, the second outer edge 131 is a circle formed by connecting line segments, where the line segments are formed by extension of points on the first outer edge 122 toward the inside of the wall 1 by a same third distance L3 in a direction of normal line or perpendicular line of the first outer edge 122. Alternatively, as shown in FIG. 5, the second outer edge 131 may be formed in the following manner: Among a plurality of line segments formed by extension of points on the first outer edge 122 toward the inside of the wall surface 1 by a third distance L3 in a direction of normal line or perpendicular line of the first outer edge 122, at least two line segments are not connected, meaning that there is a non-connected part (meaning that the closed first outer edge 122 extends inwardly for the third distance L3 to form an unclosed structure). Two of the line segments that are adjacent to the non-connected part further extend to intersect with each other, so that the first outer edge 122 extends inwardly by the third distance L3 to form a closed circle. In this case, a curvature of the extension of the two line segments is equal to a curvature of the first outer edge 122, and the closed circle is the second outer edge 131 described above.

In this embodiment, as shown in FIG. 3 to FIG. 5, the outer end edge 11 of the wall 1 deviates toward the inside of the wall 1 by the third distance L3 to form the second outer edge 131, and the zone enclosed by the second outer edge 131 is the second zone 13. Therefore, the second zone 13 is a closed zone enclosed by the second outer edge 131. Moreover, the second zone 13 is a zone formed by the outer end edge 11 deviating toward the inside of the wall surface 1, so the second zone 13 is close to the geometric center of the wall 1.

When the pressure in the housing increases due to the gas generation of the electrochemical apparatus, the wall 1 is subjected to the pressure. Under the action of the pressure, the wall 1 undergoes a specific degree of deformation, and the deformation of the wall 1 in the second zone 13 is relatively large, meaning that compared with other positions, this position is more likely to break and form an opening under the action of pressure. Therefore, compared with that the stress-weak zone 2 is arranged in other positions of the wall 1, when the stress-weak zone 2 is arranged in the second zone 13, the stress-weak zone 2 deforms greatly under the pressure of the gas generated in the housing, meaning that the stress-weak zone 2 at this position is easy to form an opening, to discharge the gas in the housing more easily, thereby further reducing risks of expansion, deformation, and even explosion of the electrochemical apparatus.

Furthermore, a ratio of an area of the second zone 13 to an area of the wall 1 ranges from 10% to 22%. For example, the ratio of the two may be 10%, 15%, 20%, 22%, or the like. In an embodiment, the ratio of the area of the second zone 13 to the area of the wall 1 may be 20%. In this case, the stress-weak zone 2 provided in the second zone 13 can well meet the pressure relief requirements.

Specifically, as shown in FIG. 3 to FIG. 5, there is a second distance L2 between the outer end edge 11 and the geometric center of the wall 1, and the third distance L3 is a vertical distance between the first edge 122 and the outer end edge 11. In this case, the third distance L3 and the second distance L2 satisfy: $0.2 \leq L3/L2 \leq 0.5$.

In this embodiment, when the ratio of the third distance L3 to the second distance L2 satisfies the above relation, the ratio of the area of the second zone 13 to the area of the wall 1 ranges from 10% to 22%. In this case, the stress-weak zone 2 is arranged in the second zone 13, and when gas is generated inside the electrochemical apparatus, the position of the wall 1 in where the stress-weak zone 2 is located deforms greatly, so that the stress-weak zone 2 can quickly form an opening to discharge the gas inside the electrochemical apparatus, thereby improving the safety of the electrochemical apparatus.

In an embodiment, as shown in FIG. 3, the outer end edge 11 and the second outer edge 131 are both circular-shaped or arc-shaped, and a central angle of the outer end edge 11 may be 360° or less than 360°, meaning that at least part of the wall 1 may be arc-shaped. In this case, the distance between the second outer edge 131 and the geometric center of the wall 1 is R2, a radius of the outer end edge 11 is R, and $0.3 \leq R2/R \leq 0.5$, for example, a ratio of R2 to R may be specifically: 0.3, 0.35, 0.4, 0.45, or the like.

In this embodiment, when $0.3 \leq R2/R \leq 0.5$, the ratio of the area of the second zone 13 to the area of the wall 1 may range from 10% to 22%.

Specifically, as shown in FIG. 3, the wall 1 is circular, that is, the outer end edge 11 of the wall surface 1 encloses a circular wireframe. In this case, the second zone 13 is a circular zone, and a radius of the second zone 13 is R2, where

$$R2 = \sqrt{0.2}R$$

.

In this embodiment, the area of the second zone 13 is $S2 = \pi R2^2 = 0.2\pi R^2$. In this case, the ratio of the area S2 of the second zone 13 to the area S of the wall 1 satisfies $S2/S = 0.2$.

In this embodiment, when the wall 1 is a regular circle, the second zone 13 configured to arrange the stress-weak zone 2 is a regular circular structure, making it easy to determine the position of the stress-weak zone 2.

To verify the pressure relief effect of the wall 1 being provided with the stress-weak zone 2 (using the groove as an example), a pressure relief comparison test is carried out. In the test, the stress-weak zone 2 is arranged as the embodiment shown in FIG. 3. During the test, the shapes, thicknesses, materials, and other parameters of the housings are the same. The only difference is whether the stress-weak zone 2 is provided and positions of the stress-weak zones 2 are different. The following table shows the test results.

| r (mm) | $r^2/R^2$ | Number of tests | Average relief pressure (MPa) | Number of explosions |
|---|---|---|---|---|
| 2.6 | 0.751 | 10 | 0.37 | 0 |
| 2.4 | 0.64 | 10 | 1.62 | 0 |
| 2.22 | 0.5476 | 10 | 2.5 | 0 |
| 2.12 | 0.50 | 10 | 3.77 | 1 |
| 1.9 | 0.40 | 10 | 3.85 | 3 |
| 1.6 | 0.284 | 10 | 4.25 | 6 |
| 1.34 | 0.200 | 10 | 3.29 | 1 |
| 0.7 | 0.054 | 10 | 2.71 | 0 |
| 0 | 0 | 10 | 0.89 | 0 |
| No groove | / | 10 | 6.2 | 10 |

r in the table represents the distance between the groove and the geometric center of the wall 1, that is, the radius of the position of the groove, and r can represent the position of the groove. For example, when R=3 mm, R2 may be 1.34 mm. In the test, the groove is located at the first inner edge 121 of the first zone 12 when r=2.12 mm, and the groove is located at the second outer edge 131 of the second zone 13 when r=1.34 mm. The upper and lower limits of the battery pressure are required to be (0.1 MPa, 4 MPa). It can be seen from the test results that when r=1.6 mm, that is, the groove was not within the range of the first zone 12 and the second zone 13, the groove did not release pressure effectively, the average relief pressure was higher than the upper limit, and most batteries exploded. When the groove was located in the first zone 12 and the second zone 13 (r≥2.12 mm or r≤1.34 mm), the groove could effectively release the pressure and prevent the battery from exploding. Further, when the groove was located in the zone in which the ratio of the area S1 of the first zone 12 to the area S of the wall 1 was 45% (that is, r≥2.22 mm), the average relief pressure further reduced, and no battery exploded.

In another embodiment, the wall 1 is rectangular, that is, the outer end edge 11 of the wall 1 encloses a rectangular wireframe. In this case, the first zone 12 is a rectangular ring, side lengths of the wall 1 are t1 and t2 (the length and width of the rectangular wireframe) respectively, and the first distance L1, t1 and t2 satisfy the relation $S1=t1 \times t2-(t1-2L1) \times (t2-2L1)=0.5t1 \times t2$.

In this embodiment, the area S of the wall 1 satisfies $S = t1 \times t2$, and the area S2 of the second zone 13 satisfies: $S2 = (t1-2L1) \times (t2-2L1) = 0.2t1 \times t2$. Therefore, the ratio of the area S2 of the second zone 13 to the area of the wall 1 satisfies $S2/S = 0.2$.

In this embodiment, as shown in FIG. 4, when the wall 1 is a regular rectangle, the second zone 13 configured to arrange the stress-weak zone 2 is a regular rectangular structure, making it easy to determine the position of the stress-weak zone 2.

To verify the pressure relief effect of the wall 1 being provided with the stress-weak zone 2 (using the groove as an example), a pressure relief comparison test is carried out. In the test, the stress-weak zone 2 is arranged as the embodiment shown in FIG. 4. During the test, the shapes, thicknesses, materials, and other parameters of the housings are the same. The only difference is whether the stress-weak zone 2 is provided and positions of the stress-weak zones 2 are different. The following table shows the test results.

| D (mm) | (t1-2D)×(t2-2D)/(t1×t2) | Number of tests | Average relief pressure (MPa) | Number of explosions |
|---|---|---|---|---|
| 1 | 0.918 | 10 | 0.26 | 0 |
| 2 | 0.84 | 10 | 0.55 | 0 |
| 4 | 0.693 | 10 | 1.17 | 0 |
| 6 | 0.56 | 10 | 1.79 | 0 |
| 8 | 0.44 | 10 | 2.38 | 4 |
| 10 | 0.333 | 10 | 3.01 | 6 |

(continued)

| D (mm) | (t1-2D)×(t2-2D)/(t1×t2) | Number of tests | Average relief pressure (MPa) | Number of explosions |
|---|---|---|---|---|
| 12 | 0.24 | 10 | 3.36 | 6 |
| 13 | 0.198 | 10 | 2.11 | 1 |
| 14 | 0.16 | 10 | 1.92 | 0 |
| 16 | 0.093 | 10 | 1.20 | 0 |
| No groove | / | 10 | 4.05 | 10 |

D in the table represents a shortest vertical distance between the groove and the outer end edge 11 of the wall surface 1, and D can represent the position of the groove. For example, when t1=60 mm and t2=40 mm, L3 may be 13 mm. In the test, when D=6 mm, the groove is located at the first inner edge 121 of the first zone 12, and when D=13 mm, the groove is located at the second outer edge 131 of the second zone 13. The upper and lower limits of the battery pressure are required to be (0.06 MPa, 2.4 MPa). It can be seen from the test results that when 8 mm≤D<13 mm, that is, the groove was not within the range of the first zone 12 and the second zone 13, the groove did not release pressure effectively, the average relief pressure was close to or even higher than the upper limit, and most batteries exploded. When the groove was located in the first zone 12 and the second zone 13 (D≥13 mm or D<8 mm), the groove could effectively release the pressure and prevent the battery from exploding.

In another embodiment, as shown in FIG. 5, the wall 1 is L-shaped, that is, the outer end edge 11 of the wall 1 encloses an L-shaped wireframe. In this case, the first zone 12 is an L-shaped ring, and under the condition that side lengths of the wall 1 are t1, t2, t3, t4, t5, and t6 respectively and that t2=t4+t6 and t3=t1+t5, the third distance L1, t1, t2, t3, t4, t5, and t6 satisfy the relation: $0.45×(t2×t3-t5×t6)=(t2×t3-(t2-2L1)×(t3-2L1))$.

In this embodiment, the area S of the wall 1 satisfies $5 = t2 × t3-t5 × t6$, and the area S2 of the second zone 13 satisfies: $S2 = (t3-2L3) × (t4-2L3) + t6 × (t1-2L3)$. Therefore, the ratio of the area of the second zone 13 to the area of the wall 1 satisfies $S2/S = 0.2$.

To verify the pressure relief effect of the wall 1 being provided with the stress-weak zone 2 (using the groove as an example), a pressure relief comparison test is carried out. In the test, the stress-weak zone 2 is arranged as the embodiment shown in FIG. 5. During the test, the shapes, thicknesses, materials, and other parameters of the housings are the same. The only difference is whether the stress-weak zone 2 is provided and positions of the stress-weak zones 2 are different. The following table shows the test results.

| D (mm) | (t2×t3-(t2-2D)×(t3-2D))/(t2×t3-t5×t6) | Number of tests | Average relief pressure (MPa) | Number of explosions |
|---|---|---|---|---|
| 1 | 0.108 | 10 | 0.16 | 0 |
| 2 | 0.212 | 10 | 0.41 | 0 |
| 3 | 0.312 | 10 | 1.07 | 0 |
| 3.75 | 0.384 | 10 | 1.44 | 0 |
| 4.32 | 0.438 | 10 | 1.65 | 1 |
| 5 | 0.5 | 10 | 1.77 | 3 |
| 6 | 0.588 | 10 | 3.2 | 8 |
| 7 | 0.672 | 10 | 2.06 | 5 |
| 7.67 | 0.726 | 10 | 1.76 | 4 |
| 8.63 | 0.8 | 10 | 1.71 | 1 |
| 9 | 0.828 | 10 | 1.4 | 0 |
| 10 | 0.9 | 10 | 0.68 | 0 |
| No groove | / | 10 | 3.1 | 10 |

D in the table represents the distance between the groove and the outer end edge 11 of the wall 1, that is, D can represent the position of the groove. For example, when t1=25 mm, t2=60 mm, t3=50 mm, t4=20 mm, t5=25 mm, and t6=40 mm, the third distance L3 may be 7.67 mm. In the test, when D=5 mm, the groove is located at the first inner edge 121 of the first zone 12, and when D=8.63 mm, the groove is located at the second outer edge 131 of the second zone 13. The upper and lower limits of the battery pressure are required to be (0.04 MPa, 1.8 MPa). It can be seen from the test results that when 5 mm<D<8.63 mm, that is, the groove was not within the range of the first zone 12 and the second zone 13, the groove did not release pressure effectively, the average relief pressure was close to or even higher than the upper limit, and most batteries exploded. When the groove was located in the first zone 12 and the second zone 13 (D≥8.63 mm or D≤5 mm), the groove could effectively release the pressure and prevent the battery from exploding.

In an embodiment, as shown in FIG. 3 to FIG. 5, the first zone 12 and the second zone 13 each may be provided with a stress-weak zone 2. In this case, both the zone with greater stress (the first zone 12) and the zone with a large deformation (the second zone 13) are provided with the stress-weak zone 2. When the pressure inside the electrochemical apparatus increases due to gas generation, the stress-weak zone 2 located in the first zone 12 is subjected to greater stress and therefore breaks to form an opening, and the position of the second zone 13 in the wall 1 deforms greatly, so that the stress-weak zone 2 at this position breaks to form an opening. The gas inside the electrochemical apparatus is discharged through the foregoing two openings.

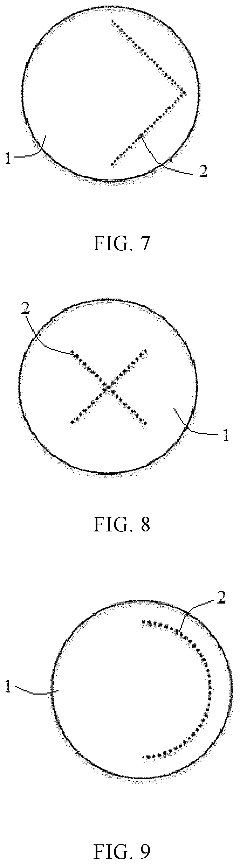

In the foregoing embodiments, the shape of the stress-weak zone 2 may be in various shapes such as arc, linear, broken-line, and curve. Three schemes shown in FIG. 7 to FIG. 9 are used as examples to carry out a verification test on the shape of the stress-weak zone 2 (using the groove as an example). The upper and lower limits of the battery pressure are required to be (0.1 MPa, 4 MPa). During the test, the positions, lengths, widths, depths, and other parameters of the stress-weak zones are the same. The following table shows the test results.

| Shape of stress-weak zone | Number of tests | Average relief pressure (MPa) | Number of explosions |
| --- | --- | --- | --- |
| 1 | 10 | 2.33 | 0 |
| 2 | 10 | 2.59 | 0 |
| 3 | 10 | 0.56 | 0 |
| No groove | 10 | 6.2 | 10 |

Although the batteries in the three schemes shown in FIG. 7 to FIG 9 did not explode, the arc-shaped groove in scheme 3 could release the pressure earlier in the required pressure range, better reducing the risk of explosion.

Based on this, in the foregoing embodiments, a curvature of the stress-weak zone 2 is the same as a curvature of the outer end edge 11 closest to the stress-weak zone 2. For example, as shown in FIG. 1 and FIG. 2, when the outer end edge 11 is in a arc shape, the stress-weak zone 2 is in a arc shape as shown in FIG. 9; when the outer end edge 11 is in a straight-line shape, the stress-weak zone 2 is in a straight-line shape; and when the outer end edge 11 is in a broken-line shape, the stress-weak zone 2 is in a broken-line shape, provided that the curvature of the stress-weak zone 2 is the same as the curvature of the outer end edge 11 closest to the stress-weak zone 2.

In an embodiment, the stress-weak zone 2 may be a continuous structure or a discontinuous structure. As shown in FIG. 1 and 2, the stress-weak zone 2 is a discontinuous structure, that is, a plurality of spaced break points form the stress-weak zone 2.

In an embodiment, the wall 1 may be provided with one or more stress-weak zones 2, and each stress-weak zone 2 may be a continuous structure or a discontinuous structure.

In another embodiment, the total length of the stress-weak zone 2 provided on the same wall 1 is greater than or equal to 3 mm. For the stress-weak zone 2 of a continuous structure, the total length is the length of the stress-weak zone 2. For the stress-weak of a discontinuous structure shown in FIG. 1 and FIG. 2, the total length is a sum of the lengths of the discontinuous structures. When the wall 1 is provided with a plurality of stress-weak zones 2, the total length is a sum of lengths of the stress-weak zones 2.

In this embodiment, if the total length of the stress-weak zone 2 of the same wall 1 is too large, the strength of the wall 1 is low, resulting in a low structural strength of the battery and reducing the service life of the battery; if the total length of the stress-weak zone 2 of the same wall 1 is too small, when the pressure inside the battery is too high due to gas generation, an area of an opening formed by the fracture of the stress-weak zone 2 is small, it takes a long time for the gas inside the battery to discharge, and the pressure cannot be released quickly, resulting in lower battery safety. In this embodiment, when the total length of the stress-weak zone 2 of the same wall 1 is greater than or equal to 3 mm, the housing of the battery has a higher strength and longer service life. In addition, the area of the opening formed by the stress-weak zone 2 is relatively large, allowing the gas inside the battery to be discharged quickly, reducing the risk of expansion, deformation, or even explosion of the battery, and improving the safety of the battery.

The embodiments shown in FIG. 1 and FIG. 2 are used as examples to carry out verification test on the total length of the stress-weak zone 2. The upper and lower pressure limits of the battery are required to be (0.1 MPa, 4 MPa), and during the test, the positions, shapes, widths, depths, and other parameters of the stress-weak zones are the same. The following table shows the test results.

| Group | Radius R of stress-weak zone (mm) | Length of stress-weak zone (mm) | Quantity | Average relief pressure (MPa) | Number of explosions |
|---|---|---|---|---|---|
| 6 | 1 | 1.57 | 10 | 5.62 | 10 |
| 7 | 1 | 3.14 | 10 | 3.36 | 0 |
| 8 | 2.5 | 3.925 | 10 | 2.02 | 0 |
| 9 | 2.5 | 7.85 | 10 | 0.56 | 0 |
| 10 | 2.5 | 15.7 | 10 | 0.18 | 0 |

It can be seen from the test results that when the total length of the stress-weak zone 2 was less than 3 mm, the stress-weak zone 2 did not have a pressure relief effect, and all the batteries exploded; and when the total length of the stress-weak zone 2 was greater than 3 mm, the battery could release pressure as required, effectively avoiding battery explosion.

In an embodiment, as shown in FIG. 6, a depth H of the stress-weak zone 2 is 30% to 90% of the thickness of the wall 1. For example, a ratio of the depth of the stress-weak zone 2 to the thickness of the wall 1 may be: 30%, 50%, 60%, 80%, 90%, or the like.

Specifically, if the depth H of the stress-weak zone 2 is too large (for example, greater than 90% of the thickness of the wall 1), when the battery is operating properly without gas generation, the housing at the position of the stress-weak zone 2 has a low structural strength and is easily damaged, leading to battery failure, shortening battery life, and causing a risk of leakage from the position of the stress-weak zone 2; and if the depth H of the stress-weak zone 2 is too small (for example, less than 30% of the thickness of the wall 1), when gas is generated inside the battery, the stress-weak zone 2 with this depth H requires a relatively large pressure to break, that is, the stress-weak zone 2 can form an opening only when the internal pressure of the battery reaches a large value, making the gas inside the battery fail to be quickly discharged.

In this embodiment, when the depth H of the stress-weak zone 2 is 30% to 90% of the thickness of the wall 1, during normal operation of the battery, the stress-weak zone 2 will not significantly reduce the structural strength of the housing, thereby reducing the battery damage risk and prolonging the service life. In addition, the stress-weak zone 2 with this depth can quickly break to form an opening when gas is generated inside the battery, thereby quickly discharging the gas inside the battery, reducing the risk of expansion, deformation, or even explosion of the battery, and improving safety of the battery.

The embodiments shown in FIG. 1 and FIG. 2 are used as examples to carry out verification test on the depth H of the stress-weak zone 2. The upper and lower pressure limits of the battery are required to be (0.1 MPa, 4 MPa), and during the test, the positions, shapes, lengths, widths, and other parameters of the stress-weak zones are the same. The following table shows the test results.

| Group | Depth of stress-weak zone/Original thickness of housing | Number of tests | Average relief pressure (MPa) | Number of explosions |
|---|---|---|---|---|
| 1 | 90% | 10 | 0.094 | 0 |
| 2 | 70% | 10 | 0.16 | 0 |
| 3 | 50% | 10 | 0.56 | 0 |
| 4 | 30% | 10 | 2.29 | 0 |
| 5 | 10% | 10 | 3.85 | 4 |
| 6 | No stress-weak zone | 10 | 6.2 | 10 |

It can be seen from the test results that when the depth H of the stress-weak zone 2 was greater than 70%, the relief pressure could not be stably controlled above the pressure relief lower limit, and there was a risk of liquid leakage in daily use; and when the depth H of the stress-weak zone 2 was less than 30%, the relief pressure could not be stably controlled below the pressure relief upper limit, and four batteries exploded. Therefore, in this embodiment, when the depth H of the stress-weak zone 2 is 30% to 70% of the thickness of the wall 1, better safety performance is provided.

Moreover, as shown in FIG. 6, the width W of the stress-weak zone 2 is 50% to 110% of the thickness of the wall 1. For example, a ratio of the width W of the stress-weak zone 2 to the thickness of the wall 1 may be: 50%, 60%, 90%, 100%, 110%, or the like. It can be understood that a larger width W of the stress-weak zone 2 means a larger area of the stress-weak zone 2.

Specifically, if the width W of the stress-weak zone 2 is too large (for example, greater than 110% of the thickness of the wall 1), the area of the wall surface 1 occupied by the stress-weak zone 2 is relatively large. When the battery is operating normally without gas generation, the housing at the position of the stress-weak zone 2 has a low structural strength, and is easily damaged, leading to battery failure and shortening the service life of the battery; if the width W of the stress-weak zone 2 is too small (for example, less than 50% of the thickness of the wall 1), an area of the wall surface 1 occupied by the stress-weak zone 2 is too small. When gas is generated inside the battery, the opening formed by the fracture of the stress-weak zone 2 is too small, making the gas inside the battery fail to be quickly discharged.

In this embodiment, when the width W of the stress-weak zone 2 is 50% to 110% of the thickness of the wall 1, during normal operation of the battery, the stress-weak zone 2 will not significantly reduce the structural strength of the housing, thereby reducing the battery damage risk and prolonging the service life. In addition, the stress-weak zone 2 with this width W forms a larger opening when gas is generated inside the battery, allowing the gas inside the battery to be quickly discharged, reducing the risk of expansion, deformation, or even explosion of the battery, and improving safety of the battery.

The embodiments shown in FIG. 1 and FIG. 2 are used as examples to carry out verification test on the width W of the stress-weak zone 2. The upper and lower pressure limits of the battery are required to be (0.1 MPa, 4 MPa), and during the test, the positions, shapes, lengths, depths, and other parameters of the stress-weak zones are the same. The following table shows the test results.

| Group | Width of stress-weak zone/Original thickness of housing | Number of tests | Average relief pressure (MPa) | Number of explosions |
|---|---|---|---|---|
| 1 | 140% | 10 | 0.058 | - |
| 2 | 110% | 10 | 0.19 | 0 |
| 3 | 80% | 10 | 0.33 | 0 |
| 4 | 50% | 10 | 0.56 | 0 |
| 5 | 20% | 10 | 4.96 | 6 |
| 6 | No stress-weak zone | 10 | 6.2 | 10 |

It can be seen from the test results that when the width W of the stress-weak zone 2 was less than 50% of the thickness of the wall 1, the battery pressure could not be stably below the pressure upper limit, and six batteries exploded; when the width W of the stress-weak zone 2 was greater than 110% of the thickness of the wall 1, the relief pressure of the battery could not be stably controlled above the lower limit; and when the width W of the stress-weak zone 2 was between 50% and 110% of the thickness of the wall surface 1, the relief pressure could be stably controlled within a safe range, and no battery exploded.

In the foregoing embodiments, the wall 1 is a wall with the largest area in the housing or a wall with a second largest area, that is, the stress-weak zone 2 in this embodiment of this application is provided on the wall with the larger area in the housing. The area of the wall is larger, so that there is a larger space to arrange the stress-weak zone 2.

Specifically, the stress-weak zone 2 may be provided on at least one of an interior surface and an exterior surface of the wall 1, and the position, size, and shape of the stress-weak zone 2 are defined by the foregoing embodiments.

In the foregoing embodiments, an elastic modulus of the wall 1 is greater than or equal to 1000 MPa, meaning that the stress-weak zone 2 is arranged on the wall with greater hardness. The wall 1 with such hardness is not easy to be elastically deformed under the action of pressure, so that under the pressure of gas generated inside the housing, the stress-weak zone 2 breaks and forms an opening, to discharge the gas inside the housing.

Specifically, the material of the wall 1 may include one or more of a PC material, an aluminum plastic film, and a metal.

The processing method of the stress-weak zone 2 in this embodiment of this application may be laser cutting, which has the advantages of high processing accuracy, high efficiency, and little damage to other parts of the housing.

The electrochemical apparatus according to this application includes any apparatus in which electrochemical reactions take place. Specific examples of the apparatus include all kinds of primary batteries, secondary batteries, fuel batteries, solar batteries, or capacitors. Specially, the electrochemical apparatus is a lithium secondary battery, including a lithium metal secondary battery, a lithium-ion secondary battery, a lithium polymer secondary battery, or a lithium-ion polymer secondary battery.

The electrochemical apparatus in the embodiments of this application can be applied to various fields, and the electrochemical apparatus in the embodiments of this application can be used provided that a device can be powered by the electrochemical apparatus. For example, the electrochemical apparatus can be used for components such as electrochemical apparatus packages and electronic devices of electric vehicles. The electronic device may be a mobile phone, a tablet computer, a desktop computer, a laptop computer, a handheld computer, a notebook computer, an ultra-mobile personal computer (Ultra-mobile personal computer, UMPC), a netbook, as well as a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. The embodiments of this application do not impose special restrictions on the specific types of electronic devices.

Specifically, the electronic device may include components such as a housing, a screen, a circuit board, and an electrochemical apparatus, where the screen, the circuit board, and the electrochemical apparatus are all installed in the housing, and the electrochemical apparatus is the electrochemical apparatus described in any of the foregoing embodiments.

The foregoing descriptions are merely preferred embodiments of this application, but are not intended to limit this application. Persons skilled in the art understand that this application may have various modifications and variations. Any modification, equivalent replacement, and improvement made without departing from the spirit and principle of this application shall fall within the protection scope of this application.

**Claims**

1. An electrochemical apparatus, **characterized in that** the electrochemical apparatus comprises:

   a housing having a cavity and comprising a wall (1);
   wherein the wall (1) is provided with a stress-weak zone (2).

2. The electrochemical apparatus according to claim 1, **characterized in that** the stress-weak zone (2) is a continuous structure or a discontinuous structure.

3. The electrochemical apparatus according to claim 1, **characterized in that** a total length of the stress-weak zone (2) arranged on the wall (1) is greater than or equal to 3 mm.

4. The electrochemical apparatus according to claim 1, **characterized in that** H is a depth of the stress-weak zone (2), and H is 30% to 90% of a thickness of the wall (1).

5. The electrochemical apparatus according to claim 1, **characterized in that** W is a width W of the stress-weak zone (2), and W is 50% to 110% of a thickness of the wall (1).

6. The electrochemical apparatus according to claim 1, **characterized in that** the wall (1) is provided with one or more stress-weak zones (2).

7. The electrochemical apparatus according to claim 1, **characterized in that** the wall (1) is a wall with the largest area of the housing.

8. The electrochemical apparatus according to claim 1, **characterized in that** the stress-weak zone (2) is arranged on at least one of an interior surface and an exterior surface of the wall (1).

9. The electrochemical apparatus according to claim 1, **characterized in that** an elastic modulus of the wall (1) is greater than or equal to 1000 MPa.

10. The electrochemical apparatus according to claim 1, **characterized in that** the stress-weak zone (2) comprises at least one of an indentation, a groove, or a zone with a material strength lower than that of its surrounding zones.

11. The electrochemical apparatus according to claim 1, **characterized in that** the wall (1) has an outer end edge (11), and a curvature of the stress-weak zone (2) is the same as a curvature of the outer end edge (11) closest to the stress-weak zone (2).

12. The electrochemical apparatus according to claim 1, **characterized in that** the wall (1) has an outer end edge (11) and a first zone (12), wherein the first zone (12) has a first outer edge (122), the first outer edge (122) coincides with the outer end edge (11), and the stress-weak zone (2) is arranged in the first zone (12); and
a ratio of an area of the first zone (12) to an area of the wall (1) ranges from 30% to 50%.

13. The electrochemical apparatus according to claim 12, **characterized in that** the first zone (12) is an annular structure, the first zone (12) has a first inner edge (121), and the first inner edge (121) is a circle formed by connecting line segments, wherein the line segments are formed by extension of points on the first outer edge (122) toward the inside of the wall (1) by a same first distance L1 in a direction of normal line or perpendicular line of the first outer edge (122).

14. The electrochemical apparatus according to claim 12, **characterized in that** the first zone (12) is an annular structure, the first zone (12) has a first inner edge (121), and the first inner edge (121) is a circle formed by connecting line segments, wherein the line segments are formed by extension of points on the first outer edge (122) toward the inside of the wall (1) by a same first distance L1 in a direction of normal line or perpendicular line of the first outer edge (122), wherein the line segments comprise a non-connected part, and two of the line segments that are adjacent to the non-connected part further extend to intersect with each other based on a same curvature as the first outer edge (122) that forms the two line segments.

15. The electrochemical apparatus according to claim 13, **characterized in that** there is a second distance L2 between the outer end edge (11) and a geometric center of the wall (1), wherein the first distance L1 and the second distance L2 satisfy $0.1 \leq L1/L2 \leq 0.4$.

16. The electrochemical apparatus according to claim 13, **characterized in that** the outer end edge (11) and the first inner edge (121) are both circular-shaped or arc-shaped; and
a distance between the first inner edge (121) and the geometric center is R1, a radius of the outer end edge (11) is R, and $0.7 \leq R1/R \leq 0.8$.

17. The electrochemical apparatus according to claim 16, **characterized in that** the wall (1) is circular, and the first zone (12) is annular; and

the first zone (12) has an inner radius of R1 and an outer radius of R;

wherein $R1 = \sqrt{0.55}R$.

18. The electrochemical apparatus according to claim 13, **characterized in that** the wall (1) is rectangular, and the first zone (12) is a rectangular ring; and
under the condition that side lengths of the wall (1) are t1 and t2 respectively, the first distance L1, t1, and t2 satisfy the relation $(t1-2L1) \times (t2-2L1) = 0.55 t1 \times t2$.

19. The electrochemical apparatus according to claim 14, **characterized in that** the wall (1) is in an asymmetrical shape, and the first zone (12) is an asymmetric ring.

20. The electrochemical apparatus according to claim 14, **characterized in that** the wall surface (1) is L-shaped, and the first zone (12) is an L-shaped ring; and
under the condition that side lengths of the wall (1) are t1, t2, t3, t4, t5, and t6 respectively and that t2=t4+t6 and t3=t1+t5, the first distance L1, t1, t2, t3, t4, t5, and t6 satisfy the relation: $0.45 \times (t2 \times t3 - t5 \times t6) = (t2 \times t3 - (t2-2L1) \times (t3-2L1))$.

21. The electrochemical apparatus according to claim 20, **characterized in that** the first zone (12) is an asymmetric L-shaped ring.

22. The electrochemical apparatus according to claim 1, **characterized in that** the wall (1) has an outer end edge (11) and a second zone (13), the stress-weak zone (2) is arranged in the second zone (13), the second zone (13) has a second outer edge (131), and the second outer edge (131) is a circle formed by connecting line segments, wherein the line segments are formed by extension of points on the first outer edge (122) toward the inside of the wall (1) by a same third distance L3 in a direction of normal line or perpendicular line of the first outer edge (122); and a ratio of an area of the second zone (13) to an area of the wall (1) ranges from 10% to 22%.

23. The electrochemical apparatus according to claim 1, **characterized in that** the wall (1) has an outer end edge (11) and a second zone (13), and the stress-weak zone (2) is arranged in the second zone (13); the second zone (13) has a second outer edge (131), and the second outer edge (131) is a circle formed by connecting line segments, wherein the line segments are formed by extension of points on the first outer edge (122) toward the inside of the wall (1) by a same third distance L3 in a direction of normal line or perpendicular line of the first outer edge (122), wherein the line segments comprises a non-connected part, and two of the line segments that are adjacent to the non-connected part further extend to intersect with each other based on based on a same curvature as the first outer edge (122) that forms the two line segments; and a ratio of an area of the second zone (13) to an area of the wall (1) ranges from 10% to 22%.

24. The electrochemical apparatus according to claim 22, **characterized in that** there is a second distance L2 between the outer end edge (11) and a geometric center of the wall (1), wherein the third distance L3 and the second distance L2 satisfy $0.2 \leq L3/L2 \leq 0.5$.

25. The electrochemical apparatus according to claim 24, **characterized in that** the outer end edge (11) and the second outer edge (131) are both circular-shaped or arc-shaped; and a distance between the second outer edge (131) and the geometric center is R2, a radius of the outer end edge (11) is R, and $0.3 \leq R2/R \leq 0.5$.

26. The electrochemical apparatus according to claim 25, **characterized in that** the wall (1) and the second zone (13) is both circular; and

   wherein $R2 = \sqrt{0.2}R$ .

27. The electrochemical apparatus according to claim 22, **characterized in that** the wall (1) and the second zone (13) is both rectangular; and under the condition that side lengths of the wall (1) are t1 and t2 respectively, the third distance L3, t1, and t2 satisfy the relation $(t1-2L3) \times (t2-2L3) = 0.2 t1 \times t2$.

28. The electrochemical apparatus according to claim 23, **characterized in that** the wall (1) and the second zone (13) is both L-shaped; and under the condition that side lengths of the wall (1) are t1, t2, t3, t4, t5, and t6 respectively and that t2=t4+t6 and t3=t1+t5, the third distance L3, t1, t2, t3, t4, t5, and t6 satisfy the relation: $(t3-2L3) \times (t4-2L3) + t6 \times (t1-2L3) = 0.2 \times (t2 \times t3 - t5 \times t6)$.

29. An electronic device, **characterized in that** the electronic device comprises:

   a housing;
   a screen, installed on the housing; and
   an electrochemical apparatus, located in an inner cavity of the housing;
   wherein the electrochemical apparatus is the electrochemical apparatus according to any one of claims 1 to 28.

FIG. 1

FIG. 2

FIG. 3

FIG. 4

FIG. 5

FIG. 6

FIG. 7

FIG. 8

FIG. 9

## INTERNATIONAL SEARCH REPORT

| | International application No. |
|---|---|
| | **PCT/CN2020/108396** |

**A. CLASSIFICATION OF SUBJECT MATTER**

H01M 50/367(2021.01)i; H01M 50/358(2021.01)i; H01M 50/30(2021.01)i; H01M 50/10(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ISI; CNKI: 宁德, 东莞, 江苏, 新能源, 壳, 罐, 盒, 箱, 薄弱, 脆弱, 弱化, 减薄, 薄壁, 开裂, 撕裂, 破裂, 断裂, 痕, 槽, 线, 口, 印, 缝, 沟, 爆, 压, 气, 面积, 半径, 内径, 直径, 距离, 应力, shell?, cas???, jar?, housing?, box??, +wall?, weak???, fragile, thin???, groove?, ruptur???, fracture, broken, break+, crack+, notch+, concave, trace, nick+, slit?, slot?, opening?, line??, dent+, blast+, impression+, mark+, explosi+, pressure, stress

**C. DOCUMENTS CONSIDERED TO BE RELEVANT**

| Category* | Citation of document, with indication, where appropriate, of the relevant passages | Relevant to claim No. |
|---|---|---|
| X | CN 203707194 U (SHENZHEN HAOPENG TECHNOLOGY CO., LTD. et al.) 09 July 2014 (2014-07-09) description, paragraphs [0004]-[0038], and figures 1-10 | 1-3, 6-10, 29 |
| Y | CN 203707194 U (SHENZHEN HAOPENG TECHNOLOGY CO., LTD. et al.) 09 July 2014 (2014-07-09) description, paragraphs [0004]-[0038], and figures 1-10 | 4, 5, 11-28 |
| Y | CN 208014752 U (SHENZHEN BAK BATTERY CO., LTD.) 26 October 2018 (2018-10-26) description, paragraphs [0004]-[0030], and figures 1-4 | 4, 5, 11, 22, 24-26 |
| Y | KR 20120094693 A (LG CHEMICAL LTD.) 27 August 2012 (2012-08-27) description paragraphs [0009], [0094], figures 1, 10 | 12-21, 23, 27, 28 |
| Y | CN 101944632 A (SB LIMOTIVE CO., LTD.) 12 January 2011 (2011-01-12) description paragraphs [0042], [0046], figures 1A-7 | 4, 12, 13, 15, 18 |
| A | CN 202585583 U (NINGDE AMPEREX TECHNOLOGY LIMITED et al.) 05 December 2012 (2012-12-05) entire document | 1-29 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 April 2021** | **29 April 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2020/108396**

### C.    DOCUMENTS CONSIDERED TO BE RELEVANT

| Category* | Citation of document, with indication, where appropriate, of the relevant passages | Relevant to claim No. |
|---|---|---|
| A | CN 209401714 U (JIANGSU TAFEL NEW ENERGY TECH. CO., LTD. et al.) 17 September 2019 (2019-09-17)<br>entire document | 1-29 |
| A | KR 20020071178 A (SAMSUNG SDI CO., LTD.) 12 September 2002 (2002-09-12)<br>entire document | 1-29 |

Form PCT/ISA/210 (second sheet) (January 2015)

**INTERNATIONAL SEARCH REPORT**
**Information on patent family members**

International application No.

**PCT/CN2020/108396**

| Patent document cited in search report | | | Publication date (day/month/year) | Patent family member(s) | | | Publication date (day/month/year) |
|---|---|---|---|---|---|---|---|
| CN | 203707194 | U | 09 July 2014 | None | | | |
| CN | 208014752 | U | 26 October 2018 | None | | | |
| KR | 20120094693 | A | 27 August 2012 | None | | | |
| CN | 101944632 | A | 12 January 2011 | EP | 2273584 | A1 | 12 January 2011 |
| | | | | KR | 20110003866 | A | 13 January 2011 |
| | | | | JP | 5564338 | B2 | 30 July 2014 |
| | | | | US | 8828593 | B2 | 09 September 2014 |
| | | | | US | 2011003194 | A1 | 06 January 2011 |
| | | | | JP | 2011014536 | A | 20 January 2011 |
| | | | | EP | 2273584 | B1 | 27 March 2013 |
| CN | 202585583 | U | 05 December 2012 | None | | | |
| CN | 209401714 | U | 17 September 2019 | None | | | |
| KR | 20020071178 | A | 12 September 2002 | None | | | |

Form PCT/ISA/210 (patent family annex) (January 2015)